# EUROPÄISCHE PATENTANMELDUNG

(11) **EP 1 881 653 A1**
(43) Veröffentlichungstag der Anmeldung: **23.01.2008**
(21) Anmeldenummer: 07110356.8
(22) Anmeldetag: 15.06.2007
(51) Int. Cl.: H04L 12/42

(54) **Elektronische Vorrichtung zum Anschluss an einen optischen Datenbus und Verfahren**

(30) Priorität: 20.07.2006 DE 102006033639
(71) Anmelder: ROBERT BOSCH GMBH, 70442 Stuttgart (DE)
(72) Erfinder: Spichale, Thomas, 69436, Schoenbrunn (DE); Lindner, Markus, 70178, Stuttgart (DE); Wenk, Stephan, 70176, Stuttgart (DE)

(57) **Zusammenfassung**

Die Erfindung betrifft eine elektronische Vorrichtung zum Anschluss an einen optischen Datenbus mit einem elektrooptischen Wandler (31) zum Wandeln von empfangenen optischen Signalen in elektrische Signale, wobei der elektrooptische Wandler (31) mit einem Eingang einer ersten Datenbus-Kontrollereinheit (41) verbunden ist, dadurch gekennzeichnet, dass der Ausgang (42) der ersten Datenbus-Kontrollereinheit (41) mit einem Eingang (51) einer zweiten Datenbus-Kontrollereinheit (50) verbunden ist.

## Beschreibung

### Stand der Technik

Die Erfindung geht aus von einer elektronischen Vorrichtung zum Anschluss an einen optischen Datenbus oder einem Verfahren zum Anschließen einer elektronischen Vorrichtung an einen optischen Datenbus nach Gattung der unabhängigen Ansprüche. Aus der DE 101 33 749 A1 ist bereits eine Netzwerkkomponente für ein optisches Netzwerk mit Notlauffunktion bekannt. An ein optisches Netzwerk sind ein Empfängermodul und ein Sendemodul angeschlossen. Bei einem Bruch des optischen Busses ist ein Schalter vorgesehen, so dass der Ausgang der Transceivereinheit, der Daten zu dem Sendemodul abgibt, auf den Eingang des Transceivers geschaltet werden kann, der Daten von dem optischen Bus empfängt. Damit kann bei einer Störung des optischen Ringbussystemes der optische Bus gegebenenfalls derart kurzgeschlossen werden, dass über andere Datenbusse empfangene Daten zu einem Prozessor der Datenbuskomponente dennoch weitergeleitet werden können.

### Offenbarung der Erfindung

### Vorteile der Erfindung

Die erfindungsgemäße Vorrichtung mit den Merkmalen der unabhängigen Ansprüche hat demgegenüber den Vorteil, dass eine weitere Komponente auf elektronische Weise an den Datenbus angeschlossen werden kann, ohne dass ein eigener optischer Dateneingang bzw. ein eigener optischer Datenausgang erforderlich ist. Damit wird es ermöglicht, wenigstens zwei Komponenten, gegebenenfalls aber auch noch mehr Komponenten an einer Stelle in den optischen Datenbus einzuhängen. Somit ist es möglich, die Anzahl der elektrooptische Wandler zu verringern. Weiterhin ist es möglich, ein bestehendes Bussystem mit einer festen Anzahl von elektrooptischen Schnittstellen nachträglich zu erweitern, indem eine weitere Komponente auf elektronische Weise an den optischen Datenbus angeschlossen wird. Ein elektronischer Einschluss in den Datenbus ist sowohl an derjenigen Stelle möglich, an der optische Signale des Datenbusses in elektronische Signale gewandelt werden, aber auch an derjenigen Stelle, an der elektronische Signale in optische Signale gewandelt und auf den Datenbus gegeben werden. Unter einer Datenbus-Kontrollereinheit ist dabei ein elektronischer Baustein zu verstehen, der über eine Rechenlogik sowohl zum Verarbeiten der von dem Datenbus eingehenden Daten, als auch zum Verarbeiten von auf den Bus zu gebenden Daten ausgelegt ist. Eine derartige Datenbus-Kontrollereinheit könnte auch alleine an einen elektrooptischen Wandler angeschlossen werden, der sowohl Daten von dem optischen Datenbus empfängt, als auch Daten auf den optischen Datenbus gibt.

Eine besonders einfache Realisierung einer Vorrichtung zum Anschluss an einen optischen Datenbus erhält man dann, wenn die zweite Datenbus-Kontrollereinheit wieder unmittelbar mit einer zugehörigen Einheit eines elektrooptischen Wandlers verbunden wird. In einer solchen Konstruktion sind zwei Datenbus-Kontrollereinheiten an eine Kombination aus einem elektrooptischen Empfänger und einem elektrooptischen Sender an den Datenbus angeschlossen.

Durch die in den abhängigen Ansprüchen aufgeführten Maßnahmen sind vorteilhafte Verbesserungen der in den unabhängigen Ansprüchen angegebenen Vorrichtungen und Verfahren möglich. Besonders vorteilhaft ist es, Datenverbindungen insbesondere zwischen den Datenbus-Kontrollereinheiten und/oder zwischen einer Datenbus-Kontrollereinheit sowie einem elektrooptischen Wandler als LVDS-Verbindungen auszuführen (Low Voltage Differential Signalling). Eine entsprechende differentielle Signalübertragungsstrecke hat den Vorteil, dass ihre elektromagnetische Abstrahlung besonders gering ist. Somit können auch bei hohen Datenübertragungsraten elektromagnetische Störungen anderer Schaltungen einerseits, aber andererseits auch Datenübertragungsfehler bei der Übertragung selbst vermindert werden.

Weiterhin ist es vorteilhaft, an jede Datenbus-Kontrollereinheit einen Mikroprozessor anzuschließen, der mit der Datenbus-Kontrollereinheit jeweils zusammenarbeitet, indem er Daten von der Datenbus-Kontrollereinheit empfängt und Daten an die Datenbus-Kontrollereinheit abgibt. Der Mikroprozessor kann bevorzugt zur Steuerung der an den Datenbus angeschlossenen elektronischen Komponenten verwendet werden, wie beispielsweise einer Multimedia-Anwendung, ein Navigationssystem, ein Autoradio oder eine andere Audio- und/oder Videosignalquelle.

Ferner ist es vorteilhaft, eine größere konstruktive Freiheit dadurch zu erhalten, dass die Datenbus-Kontrollereinheiten auf verschiedenen Platinen angeordnet sind. Insbesondere können hierdurch entsprechend mehrere elektronische Komponenten auf einfache Weise nachgerüstet und an ein optisches Datenbussystem angeschlossen werden.

Entsprechende Vorteile ergeben sich für einen optischen Ringbus, der über wenigstens eine derartige elektronische Vorrichtung verfügt, da dieser optische Ringbus, ohne eine Vergrößerung des Busses vornehmen zu müssen, dennoch durch den einfachen Anschluss weiterer elektronischer Einrichtungen an den Datenbus in erfindungsgemäßer Weise in seiner Funktionalität erweitert werden kann. Denn eine elektronische Erweiterung des Ringbusses kann im Allgemeinen kostengünstiger ausgeführt werden, als eine vor allem auch mechanisch wesentlich aufwendigere, optische Anbindung an den Datenbus.

Ferner ist es entsprechend vorteilhaft, Daten von dem Datenbus an mehrere Datenbus-Kontrollereinheiten über die beschriebene elektronische Anbindung der mehreren Datenbus-Kontrollereinheiten an nur einen optischen Busknoten zu übertragen oder von diesem zu empfangen.

### Kurze Beschreibung der Zeichnungen

Ausführungsbeispiele der Erfindung sind in den Zeichnungen dargestellt und in der nachfolgenden Beschreibung näher erläutert. Es zeigen Figur 1 eine schematische Darstellung eines optischen Ringbusses, Figur 2 ein Ausführungsbeispiel für eine erfindungsgemäße elektronische Vorrichtung zum Anschluss an einen optischen Datenbus, Figur 3 ein weiteres Ausführungsbeispiel für eine elektronische Vorrichtung zum Anschließen an einen optischen Datenbus, Figur 4 eine Abwandlung dieses Ausführungsbeispiels.

### Ausführungsformen der Erfindung

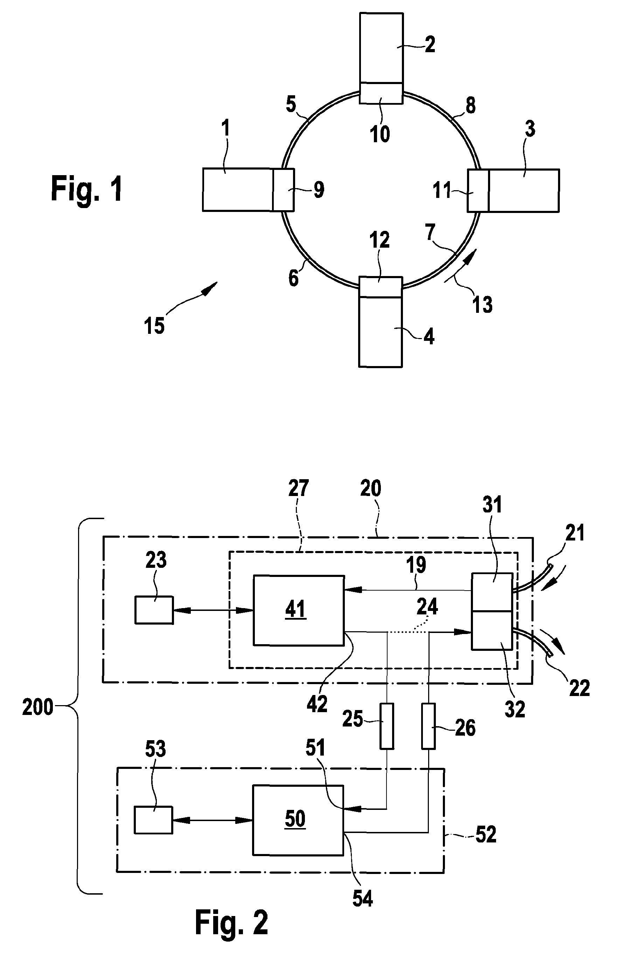

In der Figur 1 ist ein optisches Datenbussystem 15 gezeigt, bei dem mehrere Datenbuskomponenten 1, 2, 3, 4 jeweils durch Lichtleiter 5, 6, 7, 8 miteinander verbunden sind. Der Datenbus ist hierbei als ein Ringdatenbus ausgeführt. Die Daten werden jeweils von einer Buskomponente zur nächsten über einen der Lichtleiter weitergeleitet, wobei die Buskomponenten jeweils elektrooptische Wandler 9, 10, 11, 12 aufweisen, die die optischen Signale in elektronische Signale wandeln. Die elektronischen Signale werden anschließend derart von einer Datenbus-Kontrollereinheit, die in der Figur 1 nicht gezeigt ist, verarbeitet. Hierbei werden Daten in einer ersten Verarbeitungsart einfach wieder an die nächste Datenbuskomponente weitergegeben, indem sie zurück in optische Signale gewandelt und auf den nächsten, anschließenden Lichtleiter gegeben werden. Ferner können die einzelnen Datenbuskomponenten auch selbst Daten hinzufügen, Daten löschen oder Daten verändern. So können die Daten beispielsweise in Pfeilrichtung 13 durch den Datenbus geleitet werden und dabei durch die jeweils zuständige Datenbuskomponente geändert werden. An jeder Buskomponente erfolgt eine Wandlung der empfangenen optischen Daten in elektronische Daten und eine Rückwandlung der gegebenenfalls bearbeiteten elektronischen Daten in optische Daten zur Weiterleitung an die nächste an den Datenbus angeschlossene elektronische Komponente. Der optische Datenbus ist beispielsweise als ein sogenannter MOST-Bus (Media Oriented Systems Transport) organisiert. Ein derartiger Datenbus ist insbesondere im Kraftfahrzeugbereich zur Verteilung von Audio- und Videodaten verwendbar. So kann beispielsweise ein Audio-Datenstrom von einem CD-Wiedergabegerät zu einem Verstärker transportiert werden. Ferner ist es auch möglich, über den Datenbus zeitgleich ein Videobild von einer TV-Empfangseinheit zu einer Anzeigevorrichtung zu transportieren.

In der Figur 2 ist ein erstes Ausführungsbeispiel für eine erfindungsgemäße elektronische Vorrichtung zum Anschluss an einen optischen Datenbus dargestellt, die eine der in der Figur 1 gezeigten Datenbuskomponenten 1, 2, 3, 4 ersetzt. An den optischen Datenbus ist eine elektronische Vorrichtung 200 angeschlossen, die eine erste elektronische Komponente 20 umfasst. Die erste elektronische Komponente 20 wiederum umfasst zumindest einen ersten und einen zweiten elektrooptischen Wandler 31, 32, eine erste Datenbus-Kontrollereinheit 41 und einen Mikroprozessor 23. Die elektrooptischen Wandler zum Empfangen und Aussenden der optischen Signale sind bevorzugt in einer Baueinheit als sogenannte FOT (Fiber Optical Transceiver) ausgeführt. Über einen ersten Lichtleiter 21 werden optische Signale zur Datenübertragung an den ersten elektrooptischen Wandler 31 weitergeleitet, der die empfangenen optischen Signale in elektronische Signale wandelt. Die elektronischen Signale werden über eine elektronische Datenleitung 19 an die erste Datenbus-Kontrollereinheit 41 weitergeleitet. Die erste Datenbus-Kontrollereinheit 41 tauscht Daten mit dem Mikroprozessor 23 aus, indem sie beispielsweise in einen in der Figur 2 nicht dargestellten Speicher der ersten Datenbus-Kontrollereinheit 41 Daten einschreibt und dem Mikroprozessor 23 mitteilt, dass in dieser Speichereinheit für ihn Daten bereitstehen. Entsprechend kann der Mikroprozessor 23 auch in einer Speichereinheit der ersten Datenbus-Kontrollereinheit 41 die Daten einschreiben, die von der ersten Datenbus-Kontrollereinheit 41 an den Datenbus ausgegeben werden sollen. Diejenigen Daten, die auf den Bus einfach weitergeleitet werden, und diejenigen Daten, die von dem Mikroprozessor 23 auf den Datenbus gegeben werden, werden an einem Datenausgang 42 der ersten Datenbus-Kontrollereinheit 41 ausgegeben. Bei einer herkömmlichen elektronischen Komponente zum Anschließen an den optischen Datenbus würden diese Daten nun entsprechend der gepunkteten Linie ausgestalteten Datenverbindung 24 an den zweiten elektrooptischen Wandler 32 unmittelbar weitergeleitet, durch den elektrooptischen Wandler 32 in optische Signale gewandelt und an einen zweiten Lichtleiter 22 zur Weiterleitung auf den Datenbus ausgegeben.

Die erfindungsgemäße elektronische Vorrichtung 200 wird dadurch realisiert, dass eine zweite elektronische Komponente 52 an den durch die elektrooptischen Wandler 31, 32 gebildeten Datenbusanschluss angeschlossen wird. Die zweite elektronische Komponente 52 umfasst zumindest eine zweite Datenbus-Kontrollereinheit 50 und einen Mikroprozessor 53. Erfindungsgemäß wird hierbei der Ausgang 42 der ersten Datenbus-Kontrollereinheit nun an einen Dateneingang 51 der zweiten Datenbus-Kontrollereinheit 50 der zweiten elektronischen Komponente 52 weitergeleitet. Die zweite Datenbus-Kontrollereinheit 50 ist bevorzugt gleichartig der ersten Datenbus-Kontrollereinheit 41 ausgeführt. Auch sie tauscht die Daten mit dem Mikroprozessor 53 der zweiten elektronischen Komponente 52 aus. Eine Rangfolge zwischen den Datenbuskontrollereinheiten soll durch die angegebene Nummerierung nicht gegeben werde, die vielmehr nur der besseren Übersichtlichkeit dienen soll. Ein Datenausgang 54 der zweiten Datenbus-Kontrollereinheit 50 ist nun wiederum mit der ersten elektronischen Komponente 20 derart verbunden, dass der Ausgang der zweiten Datenbus-Kontrollereinheit 50 zu dem zweiten elektrooptischen Wandler 32 führt. Damit gibt die zweite Datenbus-Kontrollereinheit 50 ihre Daten unmittelbar an den elektrooptischen Wandler 32 zur Weiterleitung auf den Lichtwellenleiter 22 und damit auf den optischen Datenbus aus. Somit sind an den Busknoten des optischen Busses, der durch die beiden elektrooptischen Wandler 31, 32 gebildet wird, die beiden elektronischen Komponenten 20, 52 angeschlossen. Damit sind mittels der elektronischen Vorrichtung 200 die beiden Datenbus-Kontrollereinheiten 41, 50 über einen Busknoten des optischen Datenbusses an den optischen Datenbus angeschlossen. Die Datenverbindung zwischen dem Ausgang 42 der ersten Datenbus-Kontrollereinheit 41 und dem Eingang 51 der zweiten Datenbus-Kontrollereinheit 50 sowie der Ausgang 54 der zweiten Datenbus-Kontrollereinheit 50 und der zweite elektrooptische Wandler 32 sind hierbei bevorzugt als LVDS- ( Low Voltage Differential Signalling) Verbindungen 25, 26 ausgeführt.

Die Datenbus-Kontrollereinheit 41 und die elektrooptischen Wandler 31, 32 können als getrennte Bauteile ausgeführt sein. In einer weiteren Ausführungsform ist es jedoch auch möglich, diese Komponenten in einer gemeinsamen Baueinheit 27 beispielsweise in Form eines integrierten Schaltkreises zusammenzufassen. Die Verbindungen 25 und 26 können dann über Anschlüsse aus der integrierten Schaltungseinheit herausgeführt werden.

In einer weiteren Ausführungsform können die beiden elektronischen Komponenten 20, 52 in einer elektronischen Schaltungseinheit verbaut werden. Ferner ist es jedoch auch möglich, insbesondere bei einer LVDS-Verbindung zwischen den elektronischen Einrichtungen, die beiden elektronischen Komponenten 20, 52 baulich getrennt auszuführen. So ist es insbesondere möglich, die beiden elektronischen Komponenten 20, 52 auf unterschiedlichen Platinen oder sogar in unterschiedlichen Gehäusen anzuordnen. Der optische Datenbus ist dennoch weder unterbrochen, noch in seiner Funktion beeinträchtigt, da die Daten unmittelbar über die elektronischen Verbindungen 25, 26 zwischen den elektronischen Einrichtungen weitergeleitet und zurück auf den Datenbus gegeben werden.

In einer besonderen Ausführungsform ist es auch möglich, die erste elektronische Komponente 20 derart auszuführen, dass entweder die gepunktet gezeichnete Datenverbindung 24 oder der Anschluss der weiteren elektronischen Komponente 52 gewählt werden kann. Hierzu kann eine in der Figur 2 nicht dargestellte Umschalteinheit in der elektronischen Komponente 20 vorgesehen sein. Damit ist es möglich, gegebenenfalls die zweite elektronische Komponente 52 nach einer Verwendung der ersten elektronischen Komponente 20 alleine zu einem späteren Zeitpunkt nachzurüsten oder gegebenenfalls die zweite elektronische Komponente 52 auch wieder von der ersten elektronischen Komponente 20 zu entfernen.

An die Mikroprozessoren 23, 53 können ferner weitere Komponenten angeschlossen werden, von denen die Mikroprozessoren Informationen empfangen, wie beispielsweise Rundfunk-Empfangseinheiten oder Datenspeicher, oder an die die Mikroprozessoren 23, 53 Informationen ausgeben, wie beispielsweise Anzeigeeinheiten oder akustische Ausgabeeinheiten. So können die elektronischen Komponenten insbesondere in einem Fahrzeug verwendet werden, bei dem beispielsweise mehrere Multimedia-Komponenten, wie Rundfunkempfänger, Navigationsgeräte, Anzeigeeinheiten oder Audio-Ausgabegeräte, miteinander über einen optischen Ringbus verknüpft werden.

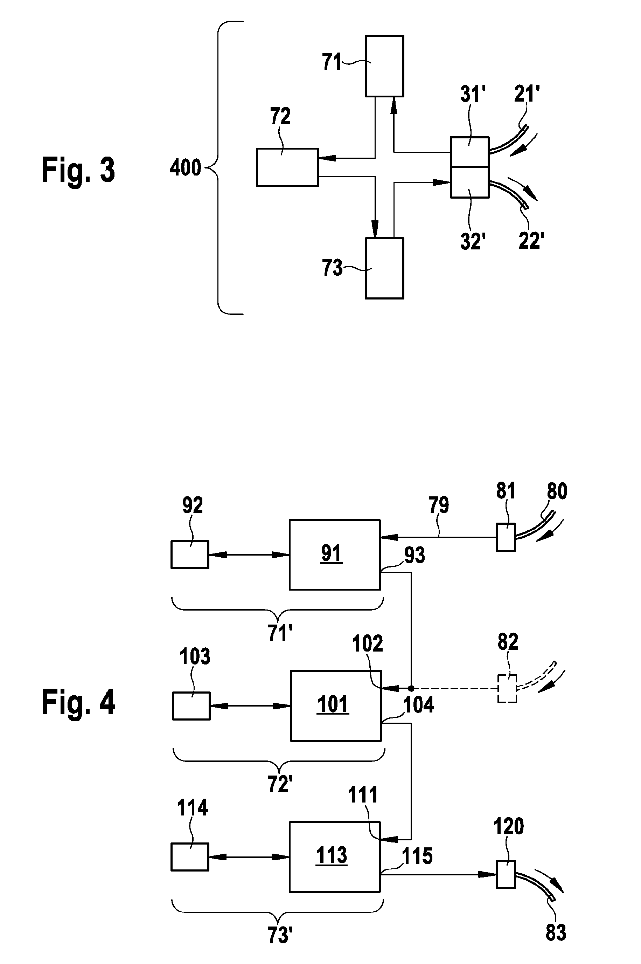

Anstelle in die Verbindung zwischen der ersten Datenbus-Kontrollereinheit 41 und dem zweiten elektrooptischen Wandler 32 kann die zweite Datenbus-Kontrollereinheit und damit die zweite elektronische Komponente auch in die elektronische Verbindung zwischen dem ersten elektrooptischen Wandler 31 und der ersten Datenbus-Kontrollereinheit 41 eingebunden werden. In einer weiteren Ausführungsform ist es auch möglich, in beide Verbindungen jeweils wenigstens eine Datenbus-Kontrollereinheit einzubinden. Eine solche Ausführungsform ist in der Figur 3 dargestellt. Hierbei wird eine erfindungsgemäße elektronische Vorrichtung 400 aus mindestens drei elektronischen Komponenten gebildet. Ausgehend von einem ersten elektrooptischen Wandler 31' ist eine erste elektronische Komponente 71 eingebunden, an die die Daten weitergeleitet werden und die entsprechend der zweiten elektronischen Komponente 52 gemäß der Figur 2 aufgebaut ist. Diese gibt Daten wiederum an eine zweite elektronische Komponente 72 aus, die Daten in entsprechender Weise an eine dritte elektronische Komponente 73 weitergibt. Ein Ausgang der dritten elektronischen Komponente 73 ist nun wiederum mit dem zweiten elektrooptischen Wandler 32' verbunden, so dass von hier aus Daten wieder auf den optischen Datenbus gegeben werden. An die elektrooptischen Wandler 31, 32 sind jeweils, wie zu der Figur 1 erläutert, jeweils Lichtleiter 21', 22' angeschlossen. Die in der Figur 3 dargestellte elektronische Vorrichtung 400, die an den elektrooptischen Datenbus angeschlossen ist, kann um weitere elektronische Komponenten, die jeweils einen eigenen Datenbus-Kontroller aufweisen, erweitert werden.

In der Figur 4 ist das Ausführungsbeispiel gemäß der Figur 3 in einer Abwandlung dargestellt, bei der die elektrooptische Wandlung über getrennte Komponenten erfolgt. Die elektronischen Komponenten 71', 72', 73' sind an einen optischen Datenbus über die Lichtleiteranschlüsse 80, 83 angeschlossen, die gemäß diesem Ausführungsbeispiel vorzugsweise getrennt ausgeführt werden. Ein erster elektrooptischer Wandler 81 ist mit einer ersten Datenbus-Kontrollereinheit 91 der ersten Komponente 71' verbunden und leitet Daten von einem Lichtleiter 80 über eine Leitungsverbindung 79 an die erste Datenbus-Kontrollereinheit 91. Die erste Datenbus-Kontrollereinheit 91 ist mit einem zugehörigen Mikroprozessor 92 verbunden. Ein Datenausgang 93 der ersten Datenbus-Kontrollereinheit 91 führt zu einem Dateneingang 102 einer zweiten Datenbus-Kontrollereinheit 101 der zweiten elektronischen Komponente 72'. Diese ist wiederum mit einem zugehörigen Mikroprozessor 103 verbunden. Ein Datenausgang 104 der zweiten Datenbus-Kontrollereinheit 101 führt zu einem Dateneingang 111 einer dritten Datenbus-Kontrollereinheit 113 der dritten elektronischen Komponente 73', die ebenfalls mit einem zugehörigen Mikroprozessor 114 verbunden ist. Der Datenausgang 115 der dritten Datenbus-Kontrollereinheit führt zu einem elektrooptischen Wandler 120, der die Daten wieder in optische Signale wandelt und auf einen Lichtleiter 83 zur Weiterleitung auf dem Datenbus ausgibt. Entsprechend wäre es auch möglich, die erste Datenbus-Kontrollereinheit 91 und damit die erste Komponente auszulassen und Daten von einem elektrooptischen Wandler 82 unmittelbar an den Dateneingang 102 der zweiten Datenbuskontrollereinheit 101 einzuspeisen. Damit wäre die kleinste Einheit einer derartigen Konstruktion gewährleistet, bei der eine Datenbus-Kontrollereinheit auf der einen Seite mit dem Ausgang einer weiteren Datenbus-Kontrollereinheit und auf der anderen Seite mit dem Eingang eines elektrooptischen Wandlers zur Weitergabe von Daten an einen optischen Ringbus ausgestattet ist.

## Patentansprüche

1. Elektronische Vorrichtung zum Anschluss an einen optischen Datenbus mit einem elektrooptischen Wandler (31) zum Wandeln von empfangenen optischen Signalen in elektrische Signale, wobei der elektrooptische Wandler (31) mit einem Eingang einer ersten Datenbus-Kontrollereinheit (41) verbunden ist, **dadurch gekennzeichnet, dass** der Ausgang (42) der ersten Datenbus-Kontrollereinheit (41) mit einem Eingang (51) einer zweiten Datenbus-Kontrollereinheit (50) elektronisch verbunden ist.

2. Elektronische Vorrichtung zum Anschluss an einen optischen Datenbus, insbesondere nach Anspruch 1, mit einem elektrooptischen Wandler (120) zum Wandeln von elektrischen Signalen in optische Signalen zur Weitergabe an den optischen Datenbus, wobei der Ausgang (104) einer ersten Datenbus-Kontrollereinheit (101) mit dem Eingang (111) einer zweiten Datenbus-Kontrollereinheit (113) elektronisch verbunden ist und wobei der elektrooptische Wandler (120) mit einem Ausgang (115) der zweiten Datenbus-Kontrollereinheit (113) verbunden ist.

3. Elektronische Vorrichtung nach einem der vorhergehenden Ansprüche, **dadurch gekennzeichnet, dass** mindestens eine Verbindung (25, 26) zwischen den Datenbus-Kontrollereinheiten untereinander oder zwischen eine Datenbus-Kontrollereinheit und einem elektrooptischen Wandler eine LVDS-Verbindung ist.

4. Elektronische Vorrichtung nach einem der vorhergehenden Ansprüche, **dadurch gekennzeichnet, dass** die erste und die zweite Datenbus-Kontrollereinheit (41, 50, 101, 113) jeweils mit einem Mikroprozessor (23, 53, 103, 114) zusammenwirken.

5. Elektronische Vorrichtung nach Anspruch 4, **dadurch gekennzeichnet, dass** die elektronische Vorrichtung (200, 400) mehrere elektronische Komponenten (20, 52, 71, 72, 73) umfasst, die jeweils durch den ihr zugeordneten Mikroprozessor (23, 53, 92, 103, 114) gesteuert werden.

6. Elektronische Vorrichtung nach einem der vorhergehenden Ansprüche, **dadurch gekennzeichnet, dass** die erste und die zweite Datenbus-Kontrollereinheit (41, 50) auf verschiedenen Platinen angeordnet sind.

7. Optischer Ringbus (15), an den wenigstens eine elektronische Vorrichtung (200, 400) nach einem der vorhergehenden Ansprüche angeschlossen ist.

8. Verfahren zum Anschluss einer elektronischen Vorrichtung an einen optischen Datenbus, wobei ein elektrooptischer Wandler Daten von dem optischen Datenbus in elektronische Daten wandelt und an eine erste Datenbus-Kontrollereinheit überträgt, **dadurch gekennzeichnet, dass** die Datenbus-Kontrollereinheit Daten an eine zweite Datenbus-Kontrollereinheit elektronisch weiterleitet.

9. Verfahren zur Anschließen einer elektronischen Vorrichtung an einen optischen Datenbus, insbesondere nach Anspruch 8, wobei eine erste Datenbus-Kontrollereinheit Daten an eine zweite Datenbus-Kontrollereinheit elektronisch weiterleitet und wobei ein elektrooptischer Wandler Daten von der zweiten Datenbus-Kontrollereinheit empfängt, in optische Signale wandelt und auf den optischen Datenbus gibt.
